# EUROPÄISCHE PATENTANMELDUNG

(11) **EP 2 975 570 A1**
(43) Veröffentlichungstag der Anmeldung: **20.01.2016**
(21) Anmeldenummer: 14177520.5
(22) Anmeldetag: 17.07.2014
(51) Int. Cl.: G06Q 20/36

(54) **Verfahren und eine Vorrichtung zur Absicherung von Zugriffen auf Wallets in denen Kryptowährungen abgelegt sind**

(71) Anmelder: draglet GmbH, 81245 München (DE)
(72) Erfinder: Jung, Ganesh, 81245 München (DE)
(74) Vertreter: 2K Patentanwälte Blasberg Kewitz & Reichel

(57) **Zusammenfassung**

Verfahren zur Absicherung von Zugriffen auf Wallets in denen Kryptowährungen und/oder deren Schlüssel abgelegt sind, mit einem Transaktions-Server, auf dem eine Transaktionslogik abläuft, zum Durchführen einer Transaktion gegenüber einem Client-Gerät, das durch einen Benutzer gesteuert wird, wobei jedem Benutzer ein Benutzer-Passwort und eine eindeutige ID zugewiesen wird, mit einem Wallet-Server, auf dem die Wallets verwaltet werden, dadurch gekennzeichnet, dass zum Abschluss einer Transaktion der Zugriff vom Transaktions-Server auf den Wallet-Server auf der Basis des Benutzer-Passworts, eines asymmetrischen Server-Schlüssel-Paars und eines symmetrischen Benutzer-Schlüssels pro Benutzer erfolgt.

## Beschreibung

Die Erfindung betrifft Verfahren und eine Vorrichtung zur Absicherung von Zugriffen auf Wallets in denen Kryptowährungen und/oder deren Schlüssel abgelegt sind, mit einem Transaktions-Server, auf dem eine Transaktionslogik abläuft, zum Durchführen einer Transaktion gegenüber einem Client-Gerät, das durch einen Benutzer gesteuert wird.

### Überblick über die Erfindung:

Kryptowährungen, wie z.B. Bitcoin, werden in sogenannten Wallets verwahrt. Kryptowährungen sind privat geschöpftes Geld bzw. Fiatgeld in der Form digitaler Zahlungsmittel. Bei ihnen werden Prinzipien der Kryptographie angewandt, um ein verteiltes, dezentrales und sicheres System einer digitalen Komplementärwährung zu realisieren. In diesem Zusammenhang wird auch auf Wikipedia http://de.wikipedia.org/wiki/Kryptow%C3%A4hrung verwiesen.

Bei einer Kryptowährung kommunizieren alle Teilnehmer miteinander über ein Peer-to-Peer-Netzwerk. Dabei wird jede Nachricht, die ein Teilnehmer in dieses Netz sendet, für jeden anderen verfügbar. Sie wird allerdings nicht als Broadcast versendet, sondern, wie bei P2P-Netzen üblich, nach und nach weitergegeben. Eine Nachricht, die in dieses Netz gesendet wird, entspricht also einer Veröffentlichung an alle Teilnehmer.

Zunächst erzeugt jeder neue Teilnehmer ein Schlüsselpaar eines asymmetrischen Kryptosystems. Der öffentliche Schlüssel wird über das P2P-Netzwerk und ggf. auch anderweitig veröffentlicht. Der private, geheim gehaltene Schlüssel erlaubt es dem Teilnehmer nun Aufträge für Transaktionen kryptographisch zu signieren. Jeder Benutzer kann auf diese Weise selbst ein Konto eröffnen. Das Konto weist als neu erzeugtes Konto ein Guthaben von Null auf. Der veröffentlichte Schlüssel ist dabei praktisch die Kontonummer und wird englisch als Account Address bezeichnet. Der private Schlüssel sichert die Verfügungsgewalt über das Konto. Da jeder Teilnehmer grundsätzlich beliebig viele solche Schlüsselpaare erzeugen kann, werden diese in einer als Wallet (engl. für Brieftasche) bezeichneten Datei aufbewahrt. In diesem Wallet werden ebenfalls Kryptowährungen abgelegt werden, die im folgenden Bitcoin genannt wird, was jedoch keine Einschränkung darstellen soll, sondern für alle Kryptowährungen steht.

Webwallets sind durch kryptographische Schlüssel und Passwörter geschützt. Um Auszahlungsanforderungen von Kunden automatisiert bearbeiten zu können, müssen diese Passwörter und Schlüssel auf einer Maschine gespeichert werden, die bei Bedarf auf Kundenwunsch Auszahlungen vornimmt.

Es können sich somit Wallets auf einer Vielzahl von Servern befinden, deren Sicherheitsstandards unterschiedlich sein können.

Auch Websiten, die Bitcoin basierte Dienste anbieten, verwenden solche Wallets. Hacker, denen es gelingt, in die Server dieser Webseiten einzudringen, können die Bitcoins, die in diesen Webwallets verwaltet werden, erbeuten.

### Übersicht über die Erfindung:

Zur Absicherung solcher Webwallets gegen Einbrüche wurden das in den Ansprüchen definierte Verfahren und das System entwickelt.

Dieses System basiert auf einem "Kryptoprozess". Das Verfahren sieht vor, dass die Verwahrung der Bitcoins auf einem getrennten Wallet-Server stattfindet. Die Kommunikation zwischen dem Webserver und dem Wallet-Server wird durch einen kryptographischen Prozess abgesichert, der auf dem Passwort des Kunden, einem gemeinsamen asymmetrischen Schlüssel und einem symmetrischen Schlüssel pro Kunde basiert.

Mit Hilfe dieses Prozesses wird verhindert, dass Angreifer, denen es gelingt, in den Transaktions-Server einzudringen, gleichzeitig Zugriff auf die Kundeneinlagen auf dem Wallet-Server erlangen. Da nur der Transaktions-Server im Internet sichtbar ist, wird so eine wesentlich erhöhte Sicherheit der Wallets erreicht.

Zur Absicherung der Verarbeitung von Walletaktionen werden zwei Server betrieben. Auf dem Transaktions-Server läuft die Transaktionslogik des abzusichernden Dienstes und auf dem Wallet-Server befindet sich die Wallet, von der aus Transaktionen kryptographischer Währungen gestartet werden können. Jeder Kunde hat ein Passwort, das nur ihm bekannt ist und eine ID, die ihn eindeutig im ganzen System identifiziert.

Im Einzelnen handelt es sich um ein Verfahren zur Absicherung von Zugriffen auf Wallets in denen Kryptowährungen und/oder deren Schlüssel abgelegt sind, mit einem Transaktions-Server, auf dem eine Transaktionslogik abläuft, zum Durchführen einer digitalen Transaktion gegenüber einem Client-Gerät, das durch einen Benutzer gesteuert wird, wobei jedem Benutzer ein Benutzer-Passwort und eine eindeutige ID zugewiesen wird. Weiterer Bestandteil ist ein Wallet-Server, auf dem die Wallets verwaltet werden. Zum Abschluss einer Transaktion erfolgt der Zugriff vom Transaktions-Server auf den Wallet-Server auf der Basis des Benutzer-Passworts, einem asymmetrischen Server-SchlüsselPaar und einen symmetrischen Benutzer-Schlüssel pro Benutzer.

Hierbei wird vorzugsweise der symmetrische Benutzer-Schlüssel durch das Benutzer-Passwort verschlüsselt und auf dem Transaktions-Server verschlüsselt abgelegt, so dass lediglich der Benutzer auf den Benutzer-Schlüssel zugriff hat, wenn er das Passwort eingibt. In einer möglichen Ausführungsform kann es einen Login-Bereich für einen Benutzer geben, über den er sich in sein persönliches Konto auf dem Transaktions-Server einloggen kann. Zusätzlich zu diesen Login - Informationen bedarf es in einer möglichen Ausführungsform der Eingabe entweder desselben oder eines weiteren Benutzer Passworts, um den symmetrischen Benutzer Schlüssel zu entschlüsseln. Das Verschlüsselungsverfahren und das Passwort sollten Standards entsprechen, die eine möglichst starke Verschlüsselung erlauben. Anschließend wird der private Schlüssel des asymmetrischen Server-Schlüssels-Paars, der auf dem Wallet-Server abgelegt ist und der öffentliche Schlüssel des asymmetrischen Serverschlüssel-Paars, der auf dem Transaktions-Server abgelegt ist, verwendet, um den symmetrischen Benutzer-Schlüssel zu übermitteln.

Hierbei wird zum Austausch des symmetrischen Benutzer-Schlüssels der symmetrische Benutzer-Schlüssel vom Transaktions-Server verschlüsselt durch den öffentlichen Schlüssel des asymmetrischen Serverschlüssel-Paars an den Wallet-Server übermittelt und dort in Bezug zu dem Benutzer, insbesondere der ID, gespeichert. Der Schlüssel wird auf dem Wallet-Server in einem sicheren Bereich abgelegt. Dieser sichere Bereich kann durch einen entsprechenden Server Schlüssel abgesichert werden, der eine entsprechende Verschlüsselung aller symmetrischen Benutzer Schlüssel vornimmt, so dass ein Zugriff durch unerlaubte Mittel erschwert wird.

Hierbei ist sicherzustellen, dass für jeden Benutzer nur eine einzige ID mit einem einzigen symmetrischen Benutzerschlüssel vorhanden ist. Ein Überschreiben dieses symmetrischen Benutzerschlüssels wird verhindert. Vielmehr wird ein neuer Datensatz angelegt, wenn ein Benutzerschlüssel gelöscht bzw. geändert werden soll. Für diese Transaktion sind jedoch besondere Eingriffe in das System notwendig, so dass sie sehr schwer durchzuführen ist. Auch wird der symmetrische Benutzerschlüssel vorzugsweise nur einmalig speichernd angelegt, und nicht permanent neu gespeichert. Somit wird der symmetrische Schlüssel auf dem Wallet-Server nie überschrieben, sondern es wird nur ein symmetrischer Schlüssel geschrieben, wenn für eine Benutzer ID noch keiner vorliegt.

Sollte es zu einer Transaktion kommen, bei der eine Kryptowährung angefordert wird, so wird eine Transaktionsanforderung vom Transaktions-Server in Bezug zu dem eingeloggten Benutzer mit der entsprechenden Benutzer ID erzeugt.

Bei einer Transaktionsanforderung zur Auszahlung der Kryptowährung durch den Transaktions-Server wird der symmetrische Schlüssel durch Eingabe des Benutzer-Passworts entschlüsselt, die Transaktionsanforderung wird mit dem symmetrischen Schlüssel verschlüsselt an den Wallet-Server übermittelt und die Auszahlung erfolgt durch den Transaktions-Server.

Da der symmetrische Schlüssel vorzugsweise mit der eindeutigen Benutzer ID abgespeichert wird, sowohl auf dem Transaktions-Server als auch auf dem Wallet-Server, und diese Benutzer-ID ebenfalls übermittelt wird, kann ein Zugriff einfach erfolgen.

Im Falle einer Änderung des Benutzer-Passworts wird der symmetrische Benutzer Schlüssel mit dem alten Passwort entschlüsselt und dem neuen Benutzer-Passwort verschlüsselt werden. Daraufhin wird der neue symmetrische Benutzer Schlüssel nach dem bekannten Verfahren übermittelt, der alte Schlüssel deaktiviert und der neue Schlüssel in einem neuen Speicherbereich abgelegt.

Um die Kommunikation zwischen dem Wallet-Server und dem Transaktions-Server sicher zu gestalten, ermöglicht der Wallet-Server nur autorisierten und/oder authentifizierten Transaktions-Servern eine Kommunikation. Hierbei ist zu beachten, dass die Kommunikation zusätzlich nochmals durch Zertifikate abgesichert und verschlüsselt wird. Auch der Zugriff auf die einzelnen Server kann zum Beispiel über SSL oder ähnliche Protokolle erfolgen, die einerseits die Identifikation des Servers bzw. seiner Adresse eindeutig zulassen und andererseits einen verschlüsselten Datenaustausch ermöglichen. Darüber hinaus können zusätzliche Login Informationen vom Transaktions-Server angefordert werden, damit dieser sich am Wallet-Server anmelden kann bzw. mit diesem Daten austauschen kann.

Eine weitere Sicherheitsmaßnahme ist, dass der Transaktions-Server nur lesend auf Kontostände des Wallet-Servers zugreifen kann und eine Transaktion erfolgt nur, wenn die Menge der Kryptowährungen groß genug ist. Hierbei werden entsprechende Anfragen vom Transaktions-Server an den Wallet-Server übermittelt, und dieser bestätigt, ob die entsprechende Mengen der Kryptowährung vorhanden ist. Gegebenenfalls kann noch eine bestimmte Menge blockiert werden, damit die Transaktion auch durchgeführt werden kann.

In einer weiteren Ausführungsform wird ein Blockchain-Verfahren verwendet, um den Stand der Kryptowährung zu bestimmen.

Beim Blockchain erfolgt eine vollständige Aufzeichnung der Transaktionen in einer Folge von Datensätzen, den sogenannten Blöcken. Alle Computer im Netzwerk verfügen über eine Kopie der Blockkette, die sie aktuell halten, indem neue Blöcke miteinander ausgetauscht werden. Jeder Block enthält eine Gruppe von Transaktionen, die seit dem vorherigen Block gesendet wurden. Um die Integrität der Blockkette zu erhalten, bestätigt jeder Block in der Kette die Integrität der vorhergehenden, zurück bis zum ersten der Blöcke. Das Einführen eines Blocks ist schwierig, da jeder Block bestimmten Anforderungen entsprechen muss, was es schwierig macht, einen gültigen Block zu generieren. Auf diese Weise kann keine Partei bestehende Blöcke überschreiben.

Ein weiterer Bestandteil der Erfindung ist ein System zur Absicherung von Zugriffen auf Wallets in denen Kryptowährungen und/oder deren Schlüssel abgelegt sind, mit einem Transaktions-Server und einem Wallet-Server, gekennzeichnet durch eine Einrichtung und Konfiguration, die das oben beschriebene Verfahren implementiert. Hierbei kann es sich um Standardserver handeln mit Prozessoren, Arbeitsspeicher, Festplatten und Netzwerkanschlüssen, auf denen ein Betriebssystem läuft, das die entsprechenden Anforderungen erfüllt. Weiterhin läuft auf diesem Betriebssystem eine entsprechende Software, die die Funktionalität des Wallet-Servers und des Transaktions-Servers implementiert. Die Verbindung der Systeme erfolgt über Netzwerke. Hierbei kann es sich einerseits um ein dezidiertes Netzwerk zwischen den beiden Systemen handeln oder um ein virtuelles privates Netzwerk (VPN), das über ein Internet geschaltet wird.

### Figurenbeschreibung:

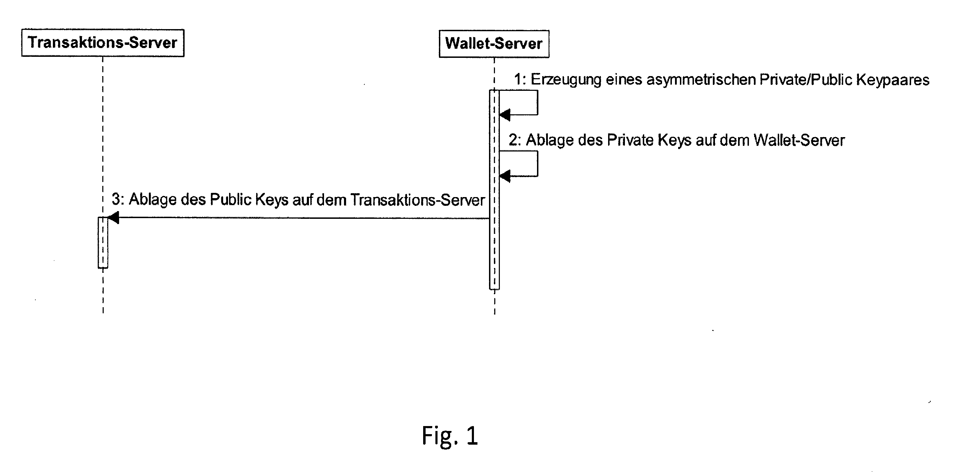

Die Figuren 1-3 zeigen Ablaufpläne der Erfindung.

### Detaillierte Beschreibung einer Ausführungsform

Im Folgenden wird die Erfindung anhand von konkreten Befehlszeilen beschrieben, die sich auch in den entsprechenden Figuren widerspiegeln.

Die kryptograhischen Prozesse werden mit Hilfe von openssl Aufrufen beispielhaft dargestellt.

### I. Asymmetrischer Schlüssel (Fig. 1)

### 1: Erzeugung eines asymmetrischen Private/Public Keypaares

Es wird ein Standard RSA Schlüssel mit 4096 bit verwendet.
openssl genrsa -out cryptoprocess.key 4096
openssl rsa -in cryptoprocess.key -pubout -out cryptoprocess.crt

### 2: Ablage des Private Keys auf dem Wallet-Server

Der Private Key "cryptoprocess.key" wird auf dem Wallet-Server abgelegt, der Key "gehört" also dem Wallet-Server.

### 3: Ablage des Public Keys auf dem Transaktions-Server

Der Public Key"cryptoprocess.crt" wird auf dem Transaktions-Server abgelegt, der Transaktions-Server kann nun sichere Nachrichten an den Wallet-Server schicken.

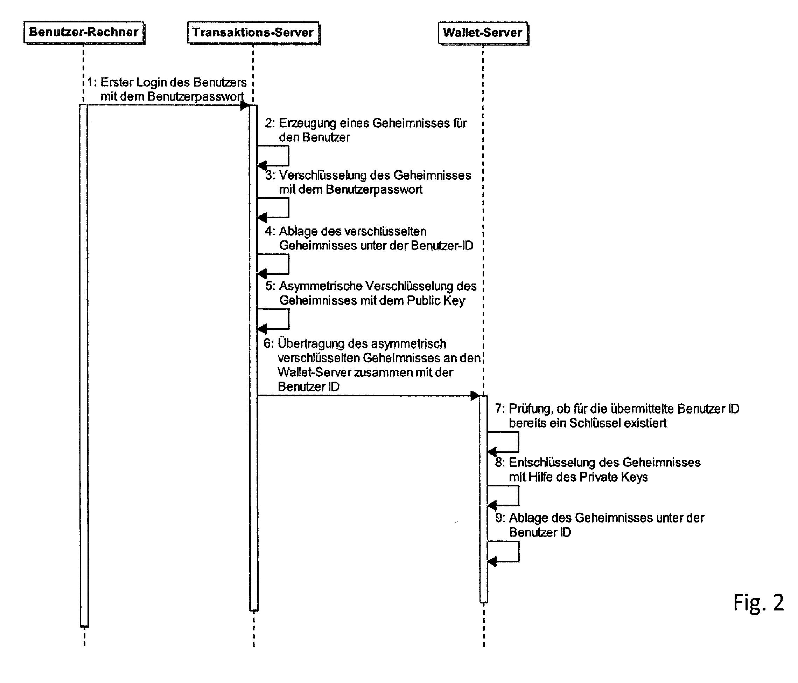

### II. Symmetrischer Schlüssel (Fig. 2)

Zur symmetrischen Verschlüsselung von Auszahlungsanforderungen wird für jeden Kunden auf dem Transaktions-Server ein Geheimnis erzeugt. Bei der Erzeugung sollte eine Software verwendet werden, die starke Zufallswerte erzeugen kann.

### 1: Erster Login des Benutzers mit dem Benutzerpasswort

Die Geheimniserzeugung erfolgt beim ersten Login des Kunden.

### 2: Erzeugung eines Geheimnisses für den Benutzer

Zur Veranschaulichung wird das Geheimnis hier in einer Datei "secret.txt" des Transaktions-Servers abgelegt. In der realen Implementierung wird das Geheimnis nur im Hauptspeicher des erzeugenden Prozesses zwischengespeichert und die Datei nicht dauerhaft abgespeichert:
openssl rand -base64 370 | tr -d "\\n" > secret.txt

Die Länge des Geheimnisses ist so zu wählen, dass eine Verschlüsselung mit Hilfe des vorher erzeugten asymmetrischen Schlüsselpaares möglich ist.

### 3: Verschlüsseung des Geheimnisses mit dem Benutzerpasswort

Das Geheimnis wird mit dem Passwort des Kunden (Variable $kundenpasswort) verschlüsselt.

cat secret.txt | openssl aes-256-cbc -a -salt -pass pass:
$kundenpasswort > password_encrypted_secret.txt

### 4: Ablage des verschlüsselten Geheimnisses unter der Benutzer ID

Das verschlüsselte Geheimnis wird unter der ID des Kunden auf dem Transaktions-Server abgelegt. Auf dem Transaktions-Server ist das Geheimnis somit ausschließlich verschlüsselt gespeichert und kann nur gelesen werden, wenn das Passwort des Kunden bekannt ist.

### 5: Asymmetrische Verschlüsselung des Geheimnisses mit dem Public Key

Zur Übertragung an den Wallet-Server wird das Geheimnis wird mit dem unter "I. Asymmetrischer Schlüssel" erzeugten Public Keys auf dem Transaktions-Server verschlüsselt.

cat ../secret.txt | openssl rsautl -encrypt -pubin -inkey cryptoprocess.crt | base64 > ../publickey_encrypted_secret.txt

### 6: Übertragung des asymmetrisch verschlüsselten Geheimnisses an den Wallet-Server zusammen mit der Benutzer ID

Das asymmetrsich verschlüsselte Geheimnis wird zusammen mit der ID des Kunden an den Wallet-Server versandt. Da die Nachricht verschlüsselt ist, können als Transportweg eine Message Queue, eine synchronisierte Datenbanktabelle oder auch http, ftp oder scp verwendet werden.

### 7: Prüfung, ob für die übermittelte Benutzer ID bereits ein Schlüssel existiert

Der Wallet-Server erhält die verschlüsselte Nachricht zusammen mit der ID des Kunden und prüft, ob für diese ID bereits ein Geheimnis vorhanden ist.

### 8: Entschlüsselung des Geheinmisses mit Hilfe des Private Keys

Ist für diese ID noch kein Geheimnis vorhanden, wird das Geheimnis mit Hilfe des Private Keys entschlüsselt.

publickey_encrypted_secret.txt | base64 -d | openssl rsautl-decrypt - inkey cryptoprocess.key > secret.txt

### 9: Ablage des Geheimnisses unter der Benutzer ID

Das Geheimnis wird unter der ID des Kunden abgelegt.

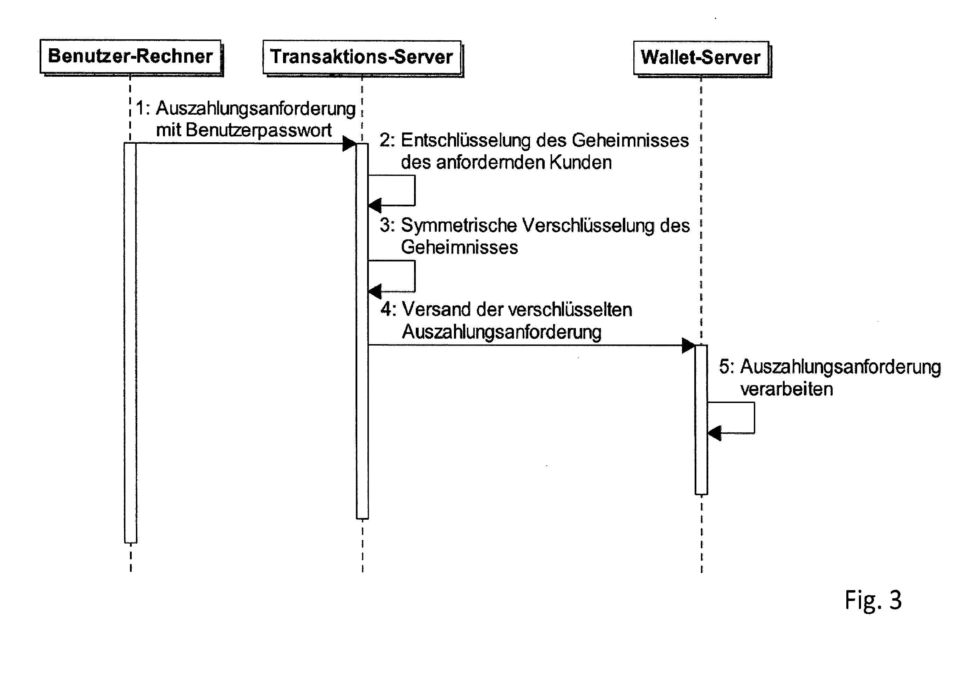

### III. Auszahlungen (Fig. 3)

### 1: Auszahlungsanforderung mit Benutzerpasswort

Der Kunde muss zusammen mit jeder Auszahlungsanforderung sein Passwort eingeben.

### 2: Entschlüsselung des Geheimnisses des anfordernden Kunden

Das Passwort des Kunden wird verwendet, um das Geheimnis, das für den Benutzer erzeugt wurde, zu entschlüsseln.

### 3: Symmetrische Verschlüsselung der Auszahlungsanforderung

Die Auszahlungsanforderung wird mit Hilfe des entschlüsselten Geheimnisses symmetrisch verschlüsselt.

echo "Ich bin eine Auszahlungsanforderung" | openssl aes-256-cbc -a -salt -pass pass: 'cat password_encrypted_secret.txt | openssl aes-256-cbc -d -a -pass pass:Skundenpasswort' > encrypted_message.txt

### 4: Versand der verschlüsselten Auszahlungsanforderung

Der Versand der verwschlüsselten Auszahlungsanforderung erfolgt über eine Message Queue, eine synchronisierte Datenbanktabelle oder auch per http, ftp oder scp.

### 5: Auszahlungsanforderung verarbeiten

Die auf dem Wallet-Server angekommene Auszahlungsanforderung wird mit Hilfe des Geheimnisses des Kunden entschlüsselt, das auf dem Wallet-Server unter der ID des Kunden abgelegt wurde.

cat encrypted_message.txt 1 openssl aes-256-cbc -a -d -pass pass: cat secret.txt'

### IV. Passwort Verwaltung (ohne Fig.)

### 1: Passwort Änderung

Weil das Geheimnis auf dem Transaktionserver mit dem Kundenpasswort verschlüsselt ist, muss es im Falle der Passwort Änderung mit dem alten Passwort (Variable 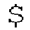 kundenpasswort_alt) entschlüsselt und mit dem neuen Passwort (Variable 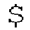 kundenpasswort_neu) verschlüsselt werden.

cat password_encrypted_secret.txt | openssl aes-256-cbc -d -a
- pass pass: 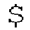 kundenpasswort_alt | openssl aes-256-cbc -a -salt
- pass pass: 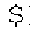 Skundenpasswort_neu > password_encrypted_secret.txt

### 2: Passwort Wiederherstellung

Im Falle eines Passwortverlustes muss es dem Kunden möglich sein, sein Passwort wiederherzustellen. Dies darf jedoch nicht vom Transaktions-Server aus automatisiert geschehen, weil ein Angreifer, der in den Transaktions-Server eingedrungen ist, eben gerade nicht Zugriff auf die Kundeneinlagen auf dem Wallet-Server erlangen soll. Ohne Kenntnis des Kundenpasswortes darf es nicht möglich sein, an das für diesen Kunden erzeugte Geheimnis zu erlangen oder es zu ändern.

Aus diesem Grund muss für die Passwortwiederherstellung ein Prozess etabliert werden, der nicht vom Transaktion-Server initiiert wird. Eine Möglichkeit, dies zu erreichen, ist eine Supportanfrage, die im Backoffice bearbeitet wird. Ein Supportmitarbeiter bearbeitet die Supportanfrage, löscht das Geheimnis des Kunden sowohl auf dem Transaktions-Server als auch auf dem Wallet-Server und veranlasst, dass dem Kunden eine Passwortwiederherstellungsmail gesendet wird. Wenn der Kunde sein neues Passwort gewählt hat, wird ein neues Geheimnis erstellt und dazu der Prozess ab "d) Geheimniserzeugung" durchlaufen.

Die Angriffsmöglichkeiten beziehen sich auf die Annahme, dass der Angreifer bereits in den Transaktions-Server eingebrochen ist und nun versucht, auf die auf dem Wallet-Server befindlichen Kundeneinlagen zuzugreifen.

Wenn der Angreifer den Benutzer selbst angelegt hat, kennt er das Passwort und kann das Geheimnis entschlüsseln. Er kann nun Auszahlungsanweisungen in beliebiger Höhe an den Wallet-Server senden.

Als Gegenmaßnahme werden die Kontostände der Kunden auf dem Wallet-Server auf Basis der Blockchain geführt. Der Transaktions-Server darf nur lesend auf die Kontostände zugreifen. Der Wallet-Server prüft vor jeder Auszahlung, ob das Guthaben des Kunden für die Auszahlung ausreicht.

In einer weiteren Form könnte der Angreifer versuchen, dem Wallet-Server ein neues Geheimnis zu senden. Als Gegenmaßnahme kann verlangt werden, dass der Wallet-Server die gespeicherten Geheimnisse nie überschreibt, sondern schreibt sie nur, wenn für eine Kunden ID noch kein Geheimnis vorhanden ist.

## Patentansprüche

1. Verfahren zur Absicherung von Zugriffen auf Wallets in denen Kryptowährungen und/oder deren Schlüssel abgelegt sind,
mit einem Transaktions-Server, auf dem eine Transaktionslogik abläuft, zum Durchführen einer Transaktion gegenüber einem Client-Gerät, das durch einen Benutzer gesteuert wird, wobei jedem Benutzer ein Benutzer-Passwort und eine eindeutige ID zugewiesen wird,
mit einem Wallet-Server, auf dem die Wallets verwaltet werden **dadurch gekennzeichnet, dass** zum Abschluss einer Transaktion der Zugriff vom Transaktions-Server auf den Wallet-Server auf der Basis des Benutzer-Passworts eines asymmetrischen Server-Schlüssel-Paars und eines symmetrischen Benutzer-Schlüssels pro Benutzer erfolgt.

2. Das Verfahren nach dem vorhergehenden Anspruch, wobei der symmetrische Benutzer-Schlüssel durch das Benutzer-Passwort verschlüsselt wird und auf dem Transaktions-Server verschlüsselt abgelegt wird, so dass lediglich der Benutzer auf den Benutzer-Schlüssel Zugriff hat.

3. Das Verfahren nach einem oder mehreren der vorhergehenden Ansprüche, wobei der private Schlüssel des asymmetrischen Server-Schlüssels-Paars auf dem Wallet-Server abgelegt ist und der öffentliche Schlüssel des asymmetrischen Serverschlüssel-Paars auf dem Transaktions-Server abgelegt ist,
wobei zum Austausch des symmetrischen Benutzer-Schlüssels der symmetrische Benutzer-Schlüssel vom Transaktions-Server verschlüsselt durch den öffentlichen Schlüssel des asymmetrischen Serverschlüssel-Paars an den Wallet-Server übermittelt wird und dort in Bezug zu dem Benutzer gespeichert wird.

4. Das Verfahren nach einem oder mehreren der vorhergehenden Ansprüche, wobei bei einer Transaktionsanforderung zur Auszahlung der Kryptowährung durch den Transaktions-Server der symmetrische Schlüssel durch Eingabe des Benutzer-Passworts entschlüsselt wird, die Transaktionsanforderung mit dem symmetrischen Schlüssel verschlüsselt an den Wallet-Server übermittelt wird und die Auszahlung durch den Transaktions-Server erfolgt.

5. Das Verfahren nach einem oder mehreren der vorhergehenden Ansprüche, wobei der symmetrische Schlüssel mit einer eindeutigen Benutzer ID sowohl auf dem Transaktions-Server als auch auf dem Wallet-Server abgespeichert ist und diese Benutzer-ID ebenfalls übermittelt wird, so dass ein Zugriff einfacher erfolgt.

6. Das Verfahren nach einem oder mehreren der vorhergehenden Ansprüche, wobei im Falle einer Änderung des Benutzer-Passworts der symmetrische Schlüssel mit dem alten Benutzer-Passwort entschlüsselt und mit dem neuen Benutzer-Passwort verschlüsselt wird.

7. Das Verfahren nach einem oder mehreren der vorhergehenden Ansprüche, wobei der Wallet-Server nur dem autorisierten und/oder authentifizierten Transaktions-Server eine Kommunikation ermöglicht.

8. Das Verfahren nach einem oder mehreren der vorhergehenden Ansprüche, wobei der Transaktions-Server nur lesend auf Kontostände des Wallet-Servers zugreifen kann und eine Transaktion nur erfolgt, wenn die Menge der Kryptowährungen groß genug ist.

9. Das Verfahren nach einem oder mehreren der vorhergehenden Ansprüche, wobei ein Blockchain-Vverfahren verwendet wird, um den Stand der Kryptowährung zu bestimmen.

10. Das Verfahren nach einem oder mehreren der vorhergehenden Ansprüche, wobei der symmetrische Schlüssel auf dem Wallet-Server nie überschrieben wird, sondern nur ein symmetrischer Schlüssel geschrieben wird, wenn für eine Benutzer ID noch kein Schlüssel vorliegt.

11. System, umfassend einen Ablauf zur Absicherung von Zugriffen auf Wallets, in denen Kryptowährungen und/oder deren Schlüssel abgelegt sind, mit einem Transaktions-Server und einem Wallet-Server, **gekennzeichnet durch** eine Einrichtung und Konfiguration, die das Verfahren nach einem oder mehreren der Ansprüche 1- 10 implementiert.
